# EUROPEAN PATENT SPECIFICATION

(11) **EP 4 449 698 B1**
(45) Date of publication and mention of the grant of the patent: **05.02.2025**
(21) Application number: 21840895.3
(22) Date of filing: 17.12.2021
(51) Int. Cl.: H04L 67/1008, H04L 67/1029, H04L 67/14, H04L 67/62, H04L 67/1014

(54) **METHOD AND DEVICE FOR SUPPORTING REAL-TIME SERVICE**
VERFAHREN UND VORRICHTUNG ZUR UNTERSTÜTZUNG EINES ECHTZEITDIENSTES
PROCÉDÉ ET DISPOSITIF POUR LA PRISE EN CHARGE D'UN SERVICE EN TEMPS RÉEL

(43) Date of publication of application: 23.10.2024
(73) Proprietor: Telefonaktiebolaget LM Ericsson (publ), 164 83 Stockholm (SE)
(72) Inventor: GUSTAFSSON, Harald, 226 47 LUND (SE); PERSSON, Per, 247 34 SÖDRA SANDBY (SE); ANGELSMARK, Ola, 271 57 YSTAD (SE); SVENSSON, Fredrik, 241 61 LÖBERÖD (SE)
(74) Representative: Ericsson
(86) International application number: PCT/EP2021/086616
(87) International publication number: WO 2023/110137

(56) References cited:
- US-A1- 2015 173 103
- ZU JIACHEN ET AL: "Resource Aware Chaining and Adaptive Capacity Scaling for Service Function Chains in Distributed Cloud Network", IEEE ACCESS, vol. 7, 11 November 2019 (2019-11-11), pages 157707 - 157723, XP011754697, DOI: 10.1109/ACCESS.2019.2950424

## Description

### TECHNICAL FIELD

The invention relates to a device and a method for real-time service, and corresponding computer program and computer program product.

### BACKGROUND

Many devices offload to cloud and/or edge cloud processing of data that is real-time, critical, periodical, or pseudo-periodical, such as cameras with video-frames, microphones with audio samples, temperature sensors with temperature samples. The cloud and/or edge cloud usually provide higher computational power than the device that generated the data. The data is processed in the cloud and/or edge cloud by workers (or processing-workers or instances). A distribution of the data between the workers may be performed by a load balancer to avoid overloading some of the workers. If the amount of data to process decreases, the number of workers is reduced. In other words, the workers are scaled in or out to handle a dynamic variation of data.

Workers usually keep a queue of jobs to be able to continuously work and avoid idle time. However, the queue of jobs introduces a delay that may reduce performance, such manufacturing/transport capacity and safety, in automation control systems. The delay may also be critical for analysis systems that need to provide information in a timely manner, for example a system for detection of tampering or faults. Therefore, the delay should be minimized, in particular for systems that have to promptly react to events and produce a response.

Briscoe, Bob et al., Low Latency, Low Loss, Scalable Throughput (L4S) Internet Service: Architecture, Internet-Draft, October 2021, discloses L4S protocol to provide low queueing delay. However, the L4S protocol is designed to reduce the delay in case of two endpoints, e.g., a client and a server, or a client and a worker, and not in case of more than two endpoints, e.g., a client and multiple workers.

US 2015/173103 A1 discloses a method causing a support request to be transmitted and receiving an indication message. The support request includes an indication of an amount of data associated with a support task and an indication of an urgency of the support task. The method further includes determining whether to wait for or reject the support task. If it is determined to wait, the method includes performing one or more idle functions, receiving a ready indication, and determining whether to proceed with or cancel the support task. If it is determined to proceed with the support task, the method further includes causing an acceptance indication to be transmitted and receiving or causing to be transmitted, the data associated with the support task.

ZU JIACHEN ET AL: "Resource Aware Chaining and Adaptive Capacity Scaling for Service Function Chains in Distributed Cloud Network", IEEE ACCESS, vol. 7, pages 157707-157723 discloses a load balancing mechanism for cloud services comprising a Virtual Network Functions (VNF) chaining algorithm proposed to embed Service Function Graph requests with minimum estimated delay and a novel VNF chaining and adaptive scaling (VNF-CAS) algorithm.

### SUMMARY

Accordingly, the solution disclosed in this document seeks to preferably mitigate, alleviate, or eliminate one or more of the disadvantages mentioned above singly or in any combination.

To achieve said object, according to a first aspect of the present invention there is provided a method for a real-time service performed by a load balancer according to claim 1.

The method of the first aspect comprises obtaining, for a plurality of clients, information on a pattern of data transfers of the real-time service. The method comprises obtaining, for at least one worker, information on run times. A run time defines a time period during which the at least one worker processes data. The method further comprises determining scheduling based at least on the obtained information on the pattern of data transfers and on the run times. The scheduling comprises an offset modifying the pattern of data transfers. The method further comprises sending the offset to one or more clients of the plurality of clients. This avoids a data transfer of a client to collide with a data transfer of other clients. The advantage is a reduction for cloud native elastic services of a delay between capture and/or transmission time of the data, and processing of the data.

According to a second aspect of the present invention there is provided a device for a real-time service, the device being a load balancer according to claim 2.

The device comprises a processor and a memory, the memory having stored thereon instructions executable by the processor. The instructions, when executed by the processor, cause the device to obtain, for a plurality of clients, information on a pattern of data transfers of the real-time service. The device is also operative to obtain, for at least one worker, information on run times, wherein a run time defines a time period during which the at least one worker processes data. The device is operative to determine scheduling based at least on the obtained information on the pattern of data transfers and on the run times, wherein the scheduling comprises an offset modifying the pattern of data transfers. The device is further operative to send the offset to one or more clients of the plurality of clients.

According to a third aspect of the present invention there is provided a computer program comprising instructions which, when run in a processing unit on a load balancer, cause the load balancer to obtain, for a plurality of clients, information on a pattern of data transfers of a real-time service; for at least one worker, obtain information on run times, wherein a run time defines a time period during which the at least one worker processes data; determine scheduling based at least on the obtained information on the pattern of data transfers and on the run times, wherein the scheduling comprises an offset modifying the pattern of data transfers; and send the offset to one or more clients of the plurality of clients.

According to a fourth aspect of the present invention there is provided a computer program product comprising a computer readable storage medium on which a computer program, as mentioned above, is stored.

In an embodiment, the scheduling comprises information on a number of workers and an identification of a worker to send further data for processing.

In an embodiment, the method further comprises sending to a controller the information on the number of workers. This allows the workers to be scaled and process the data.

In an embodiment, the method further comprises obtaining an approval of the offset if the load balancer receives an acknowledgment from the one or more clients within a defined time interval. This allows adapting the scheduling to the one or more clients requirements.

In an embodiment, the method further comprises obtaining an approval if all the one or more clients accept the offset.

In an embodiment, the method further comprises obtaining an approval if at least a number of clients higher than a first threshold accept the offset.

In an embodiment, the first threshold is indicative of a number of clients that do not accept the offset.

In an embodiment, the method further comprises obtaining a rejection if all the one or more clients do not accept the offset.

In an embodiment, the method further comprises obtaining a rejection if at least a number of clients higher than a second threshold do not accept the offset.

In an embodiment, the method further comprises rescheduling in case of rejection.

In an embodiment, the method further comprises detecting if the further data sent from the one or more clients are drifting from the offset. The method comprises rescheduling if the further data is drifting. This allows the scheduling to be modified also after an initial configuration.

In an embodiment, the method further comprises obtaining information on a status of a worker.

In an embodiment, the method comprises rescheduling if the status of the worker is unhealthy or overloaded.

In an embedment, the method comprises verifying if there is available capacity for processing data. The method comprises rejecting the data if there is not available capacity.

### BRIEF DESCRIPTION OF THE DRAWINGS

For better understanding of the present disclosure, and to show more readily how the invention may be carried into effect, reference will now be made, by way of example, to the following drawings, in which:
Figure 1a shows an example scenario according to an embodiment;
Figure 1b shows a further example scenario according to an embodiment;
Figure 2 shows messages exchanged between entities and operations performed by the entities according to embodiments;
Figure 3 shows a flowchart illustrating a method performed by a device according to embodiments;
Figure 4 is a block diagram depicting a device according to an embodiment; and
Figure 5 is a block diagram depicting units of a device according to an embodiment.

### DETAILED DESCRIPTION

Embodiments will be illustrated herein with reference to the accompanying drawings. These embodiments are provided by way of example so that this disclosure will be thorough and complete, and will fully convey the scope cof the inventive concept to those skilled in the art.

State of the art load balancers partitions a data load between workers to get as much data processed as possible. Workers usually keep a queue to be able to continuously process data, otherwise, if there are workers with no data to process, a scaling mechanism reduces the number of workers. However, the queue introduces a delay. Specifically, the delay is a time difference between a second point in time when a worker starts processing data and a first point in time when the data is sent by a device. The delay is critical in case of real-time systems that require a prompt response to events. To reduce the delay, a worker might be assigned to each device. By doing so, a worker would be ready to process the data at the point in time the worker receives the data. However, in case of a plurality of clients or devices, associating one device or one client with one worker would waste resources, since the worker might be in an idle state for a long period if there is not data to process, and therefore its utilization would be low.

To overcome these problems, the solution to be disclosed, in its embodiments, provides a method and a device for modifying a pattern of data transmissions of a real-time service so that data captured by a plurality of clients is routed to a worker that is ready to process the data at the point in time the worker receives the data. A scheduling comprising an offset, that adjusts a capture time and/or a transmit time of data of one or more clients, is defined, and sent to the plurality of clients.

The present invention in its embodiments allows data capture by one or more clients to be routed to one of a plurality of workers that is ready to process the data at the point in time the worker receives the data. The present invention avoids data transfer of a client to collide with data transfer of other clients. The advantage is a reduction for cloud native elastic services of the delay between capture and/or transmission time of the data, and processing of the data.

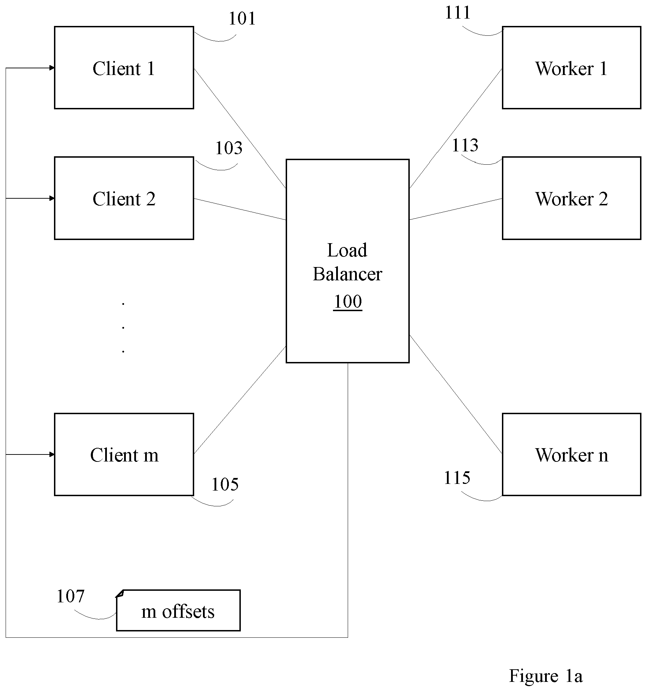

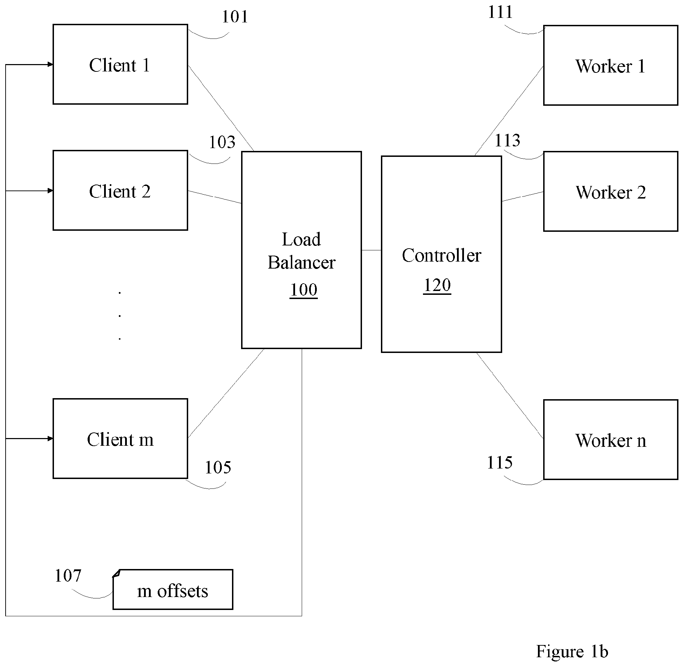

Figure 1a and Figure 1b show example scenarios in which the invention may be practiced. Figure 1a and Figure 1b show a plurality of clients 101, 103, 105, e.g., client 1, client 2, ..., client m. The plurality of clients (or downstream clients) may generate real-time and/or critical data. Examples of clients are cameras, microphones, temperature sensors, or any other device and sensor. Examples of real-time and/or critical data are video-frames, audio samples, temperature samples.

The plurality of clients may communicate with a load balancer 100 directly, as shown in Figure 1a and Figure 1b, via a controller, or via an entity that manages the plurality of clients. The controller may be the controller 120 managing the plurality of workers or a separate controller. The load balancer 100 may be a router, gateway, and any device with computing, storage, and network connectivity, that distributes tasks (or jobs) over a set of computing units (or workers) to make overall processing more efficient. The load balancer 100 also communicates with one or more workers 111, 113, 115, e.g., worker 1, worker 2, ..., worker n. The load balancer 100 communicates with the one or more workers 111, 113, 115 directly, as shown in Figure 1a, or via a controller 120, as shown in Figure 1b, or via an entity that manages the plurality of workers. Embodiments of this invention may operate within a network such that there will be switches and/or routers located between clients and a load balancer, and between the load balancer and workers. A worker, also called upstream worker, processing-worker or instance in this document, may be a virtual machine (VM), a pod, or any computing device capable of accepting and running a relevant task. Workers are scaled depending on requirements of the workload. Workers are also referred as "replicas" in the document.

The controller 120 may be an orchestrator of workers, such as Kubernetes. The controller may be a router, gateway, or any device with computing, storage, and network connectivity.

Figure 1a and Figure 1b also show a simplified version of messages sent from the load balancer 100. The load balancer 100 transmits a message comprising an offset 107 to a client 101. The load balancer may send an offset 107 to one or more clients 101, 103, ..., 105. In Figure 1a and

Figure 1b, the load balancer 100 transmits m messages to m clients. Each message comprises an offset. However, the load balancer 100 does not have to send a message comprising an offset to all the clients.

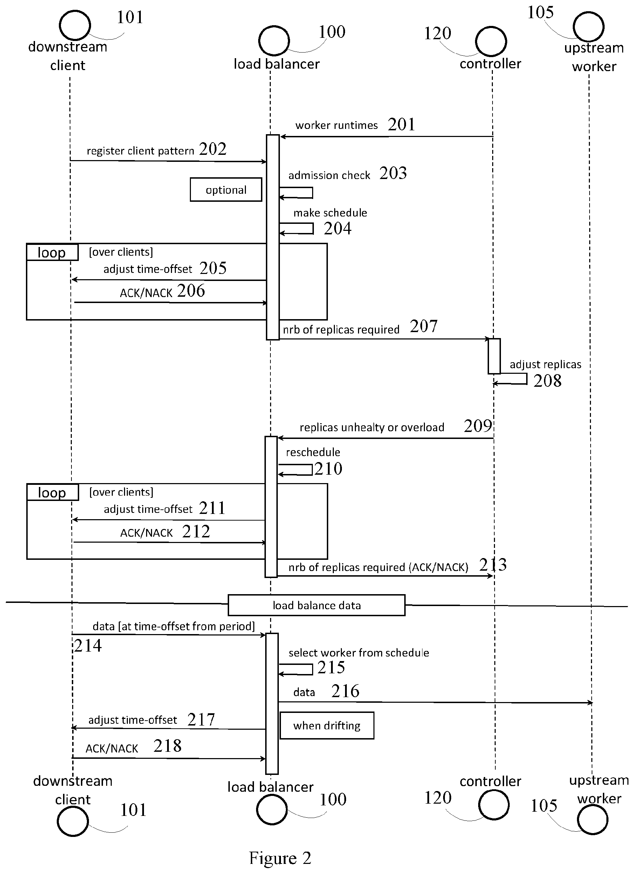

Figure 2 shows an example of messages exchanged between entities and operations performed by the entities, according to embodiments. The entities are a downstream client 101, a load balancer 100, a controller 200, and an upstream worker 105.

In an initial phase, a client 101 registers at the load balancer 100, for example by sending a "register client pattern" 202 message to the load balancer 100. The message sent to the load balancer 100 for registering comprises at least information on a pattern of data transfers of a real-time and/or critical service. The information on the pattern of data transfers may comprise a periodic time interval during which the client transmits the data, and/or an offset value. According to an embodiment, the client 101 sends a message indicative of the periodic time interval and/or the offset value.

An example of a content of the message 202 for registering is: 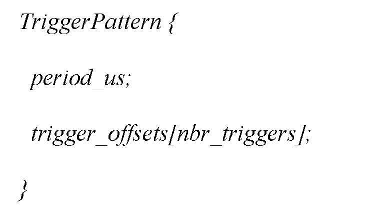 wherein
- *period_us* is a periodic time interval during which the client transmits the data;
- *trigger_offsets[nbr_triggers]* is a vector of size *nbr*_*triggers* and refers to one or more time differences between the beginning *period_us* and a point in time from which the client 101 starts transmitting the data.

Another example of the message 202 for registering may be: 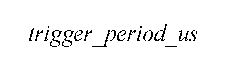 wherein *trigger_period_us* is a periodic time interval during which the client transmits the data. In this case the transmission of the data starts at the beginning of the time interval.

Further, the controller 120 transmits to the load balancer 100 information on runtimes of one or more worker. The information on runtimes is transmitted for example in a "worker runtimes" message 201. The worker run time (runtime, or running-time) is a time interval during which the worker processes a job or a data, for example a time interval during which the worker process a video-fame. According to an embodiment, the controller 120 may collect this information from the worker. Alternatively, if the controller 120 is not present, a worker 105 may signal to the load balancer 100 its run times.

An example of a content of the message 201 comprising information on run times may be: 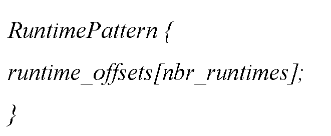 wherein *runtime_offsets[nbr_runtimes]* is a vector of size *nbr_runtimes* and indicates one or more run times for processing one or more samples or frames. According to an embodiment, a value of *nbr_runtimes* is equal to a value of *nbr*_*triggers*, i.e., one runtime corresponds to one trigger.

Another example of a content of the message 201 comprising information on run times is: 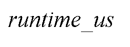 wherein *runtime*_*us* indicates one run time for all samples or frames.

The data transmitted by the clients may be characterized by different data types, such as video frames, audio samples, temperature samples, direction, speed, acceleration, location, length, volume, any physical/chemical measurement data, time/date, identities, strings, scalar values/number. According to an embodiment, a data type may be a combination of two or more data types, e.g., timestamp and a plurality of audio samples. The pattern of transmission of a data type may differ from a further pattern of transmission of a further data type. It is assumed that a run time of a worker for processing a data characterized by a data type is similar to a further runtime for processing further data characterized by the same data type. Therefore, more than one client may transmit data characterized by a same data type. In this case, the message for registering 202 sent by the client may be expanded with an array of data. The message comprising information on run times of a worker may contain a mapping between data types and run times. For example, a content of the message 202 for registering is: 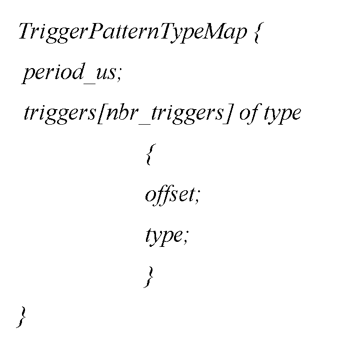 wherein
- *period_us* is a periodic time interval during which the client transmits the data;
- *trigger_offsets[nbr*_*triggers] of type* is an array with *offset* and *type*, wherein offset is a time difference between the beginning *period_us* and a point in time from which the client 101 starts transmitting the data, and *type* is a data type of the data transmitted by the client 101.

And an example of a content of the message 201 comprising information on runtimes is:

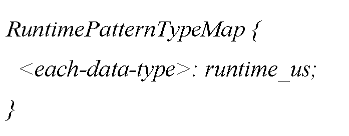

Wherein *<each-data-type>* indicates the data type of a data that a worker processes and *runtime_us* indicates a corresponding run time for processing the data.

The load balancer 101 may optionally perform an "admission check" 203 of the client 101, i.e., the load balancer 100 may check if one or more workers can be allocated to process the data of the real-time and/or critical service. If the one or more workers cannot be allocated, the client 101 is rejected. Then, the load balancer 100 may issue a message to inform the client 101 that the client 101 has been accepted, e.g., by sending an acknowledgement, or rejected, e.g., by sending a Not ACKnowledged (NACK).

The information on the pattern of data transfers of the client and the information on the run times of the workers are used by the load balancer 100 to determine a scheduling, in step 204. The scheduling comprises an offset value. The offset is a difference between a first point in time from which the time period for transmitting data begins and a second point in time wherein the client 101 should start the time period for transmitting further data. In other words, the offset shifts in time the pattern of data transfers.

The scheduling may also comprise information on a first number of workers that will process the further data, and an identification of a worker to send the further data to process.

The load balancer 101 transmits the offset value to the client 101, for example in a "adjust time-offset" message 205. Once the client has received the offset value, the client 101 may send an approval of the offset value, for example by sending an acknowledgement in an "ack" message, if the client 101 accepts the offset value. According to an embodiment, if the load balancer 101 does not receive a message with an approval indication within a defined time interval, it means that the client 101 has rejected the offset value. Alternatively, the client 101 may explicitly reject the offset value by sending for example a message with a NACK 206. In case of rejection, the load balancer 100 may perform a rescheduling. According to an embodiment, the operation of rescheduling may generate a second scheduling. The second scheduling may comprise one or more second offset values for one or more further clients and/or a second number of workers. According to an embodiment, the second scheduling does not modify the offset value of the client that rejected the scheduling. In other words, the client will keep using the offset value used before receiving the scheduling, instead one or more further clients modify their offset according to the second scheduling. The load balancer 100 may also determine a further number of workers to allocate. The further number of workers may indicate a number that increases or decreases a current number of workers.

According to an embodiment, if the scheduling comprises information on a number of workers and an identification of the worker, the load balancer 101 transmits the information on the number of workers to the controller 120, or to the worker 105, for example in a "nrb of replicas required" message 207. The controller may use the information on the number of workers to add or remove workers in step 208. The identification of the worker is used by the load balancer 100 to route the further data to a worker identified by the identification comprised in the scheduling.

During processing of data, the controller 120 monitors a state of the workers. If the controller 120 detects unhealthy or overloaded workers, the controller 120 may inform the load balancer 100 about the unhealthy or overloaded workers, for example in a "replicas unhealthy or overload" message 209. The load balancer 100, after receiving this information, may perform a rescheduling in step 210. According to an embodiment, the operation of rescheduling generates a third scheduling. The third scheduling may comprise information on a reduced load of the unhealthy or overloaded worker, or no load for the unhealthy or overloaded worker. The third scheduling may also comprise a third offset value and/or a third number of workers. The third offset value is transmitted to the client, for example in an "adjust time-offset" message 211. The third number of workers may be transmitted to the controller 120, for example in a "nrb of replicas required" message 213.

According to an embodiment, the client and the controller may approve the third scheduling via an "ack" message. The client and the controller may reject the third scheduling implicitly by not sending a response within a defined time interval, or explicitly by sending a reject message. In case of rejection of at least one of the two entities, i.e., the client or the controller, the load balancer 100 performs a further rescheduling.

According to an embodiment, if the client 101 approves an offset value comprised in a scheduling, the client uses the accepted offset value as triggering point of the transmission of the further data, in step 214. The load balancer 100 may select, in step 215, the worker indicated in the scheduling and send to the indicated worker, in step 216, the further data received from the client. The indicated worker will be ready to process the further data at the point in time the further data is received.

According to an embodiment, if the load balancer 100 detects that the client is drifting from the offset of the scheduling accepted by the client 101, the load balancer 100 performs a rescheduling. Messages 217 and 218 correspond to messages 205, 206 and/or 211, 212 in Figure 2. According to an embodiment, the load balancer 100 may detect a drift by looking at a timestamp that the client may add to a message carrying the further data. For example, the load balancer 100 may compare the timestamp in the message carrying the further data and the offset value according to the scheduling. If the client 101 is a device, the drift may be due an unprecise internal clock that either goes faster or slower than the clock of the load balancer. The drift could lead to missing a scheduled time for the client to transmit the further data, if the offset is not adjusted.

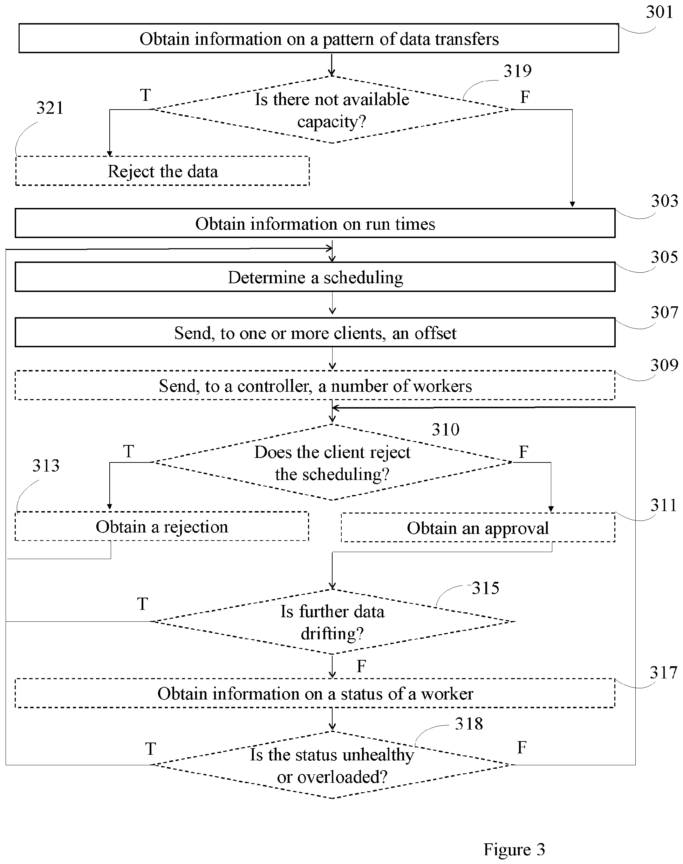

Figure 3 shows a method for providing real-time service. In one embodiment, the method may be carried out by a device 100, also referred as load balancer.

Referring to the method of Figure 3, in step 301, the method comprises obtaining 301, for a plurality of clients, information on a pattern of data transfers of the real-time service. According to an embodiment, the information may comprise an initial time period, wherein the initial time period is a periodic time interval during which a client transmits the data. The information may be obtained directly from a client 101. Alternatively, the information may be provided by a controller 120 based on configuration information, or by another entity that manages the plurality of clients.

In step 303, the method comprises obtaining, for at least one worker, information on run times, wherein a run time defines a time period during which the at least one worker processes data. A run time, running-time, or runtime, is a time interval during which the at least one worker runs a job, wherein the job is a processing of data. According to an embodiment, the information on the first time periods may be obtained from the controller 120. The controller 120 may for example measure, estimate, or predict the run time by observing the worker processing time for each job. Alternatively, the runtime could be supplied to the device 100 as a configuration at deployment time of the workers.

According to an embodiment, the obtained information on the pattern of data transfers and on the run times are used to determine a first scheduling in step 305. The scheduling comprises a first offset. The offset modifies the pattern of further data transfers of one or more clients of the plurality of clients. The offset is a time difference between a first point in time from which the one or more clients started transmitting the data and a second point in time from which the one or more clients 101 should start the time period for transmitting further data. In other words, the offset shifts in time the start of the periodic time interval to transmit the further data pattern, for the one or more clients. According to an embodiment, the first point in time is common for the plurality of clients.

According to an embodiment, the scheduling may comprise information on a first number of workers and an identification of a worker to send the further data. The number of workers indicates a number of replicas for processing the data. In other words, the scheduling comprises information on how to scale the workers. Instead, the identification of the worker indicates the worker that will process the further data. According to an embodiment, the scheduling may be obtained using a job scheduling mechanism based on meta-heuristic solutions such as random walks, genetic algorithms or simulated annealing models.

In step 307, the method comprises sending the offset to the one or more clients.

In step 309, the method further comprises sending, to the controller 120, the information on the number of workers. The controller 120 uses the information on the number of workers to scale the workers.

The method may also comprise a mechanism for negotiating 310 the scheduling with the one or more clients. According to an embodiment, in steps 311, the method further comprises obtaining an approval if the one or more clients accept the offset. According to an embodiment, if the one or more clients approved the offset, the method comprises obtaining an acknowledgment from the one or more clients within a defined time interval.

In one embodiment the solution may define a condition for approval and outcomes of negotiating 310 of the scheduling that do not satisfy the condition for approval result in rejection. Alternatively, the solution may define a condition for rejection and outcomes of negotiating 310 of the scheduling that do not satisfy the condition for rejection result in approval.

According to a preferred embodiment, the method comprises obtaining 311 an approval if all of the one or more clients accept the offset. According to an alternative embodiment, the method comprises obtaining 311 an approval if at least a number of clients higher than a threshold accept the offset. According to an embodiment, the method comprises obtaining 311 an approval if the threshold is a number of clients that do not accept the offset. In other words, the offset is considered approved if the number of clients that accept the offset is higher than the number of clients that do not accept the offset.

According to an alternative embodiment, the method comprises obtaining 311 a rejection if all of the one or more clients do not accept the offset. Alternatively, the method comprises obtaining 311 a rejection if at least a number of clients higher than a second threshold do not accept the offset. The method may comprise rescheduling in case of rejection.

The operation of rescheduling may generate a second scheduling. According to an embodiment, the second scheduling may comprise one or more second offsets for one or more further clients, and/or a second number of workers. According to an embodiment, the second scheduling may not modify the offset of the one or more clients that rejected the scheduling.

The method may also comprise a mechanism for adjusting the scheduling if the one or more clients drift from the offset comprised in the accepted scheduling. In step 315, the method further comprises detecting if the further data sent from the one or more clients is drifting from the offset. The method may further comprise rescheduling 305.

According to an embodiment, the method may comprise a monitoring 318 mechanism of the workers. In step 317, the method comprises obtaining information on a status of a worker. The method may comprise rescheduling 318/305, if the status of the worker is unhealthy or overloaded. The operation of rescheduling may generate a third scheduling. According to an embodiment, the third scheduling may comprise information on a reduced load, or no load for the unhealthy, or for the overloaded worker. According to an embodiment, the third scheduling may comprise a third offset for the one or more clients and/or a third number of workers, and a further identification of the worker.

According to an embodiment, the method may comprise an admission mechanism of the one or more clients. In step 317, the method comprises verifying if there is available capacity for processing data; and rejecting the one or more clients and the data if there is not available capacity, in step 321.

An example scenario in which the invention may be practiced is in relation to applications that require low delay, such as: interactive web, web services, voice, conversational video, interactive video, interactive remote presence, instant messaging, online gaming, remote desktop, cloud-based applications, and video-assisted remote control of machinery and industrial processes. Clients are for example a remote-control station and a plurality of stations with cameras on board of machines to be remotely controlled. The stations with cameras may generate a data stream of video frames. Processing of video frames is offloaded to workers in cloud or edge cloud. A load balancer determines a scheduling that adjusts offset of the stations with cameras to capture and/or transmit data. Following the determined scheduling, the video frames generated by the clients are ready to be processed by the workers at the point in time the video frames arrive at the workers. After they have been processed, the video frames are transmitted to the remote-control station.

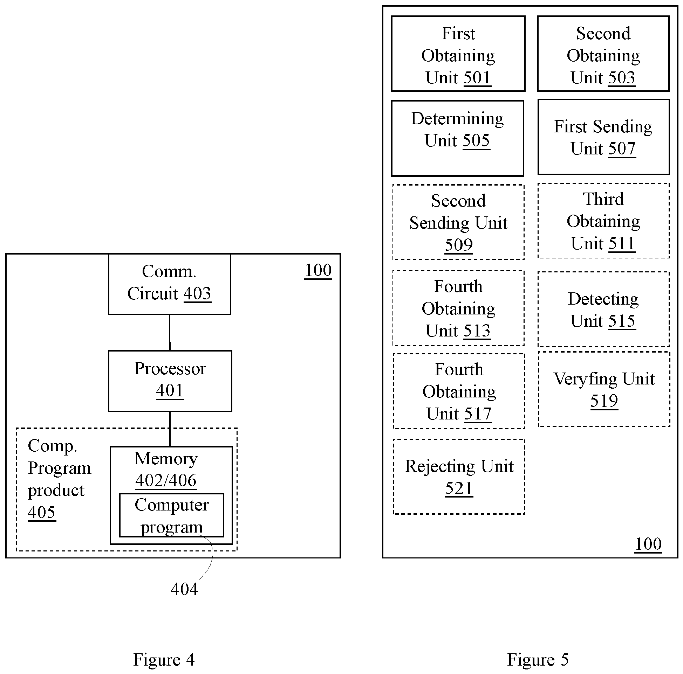

Figure 4 is a block diagram illustrating one embodiment of a device 100, comprising a processor 401, a computer program product 405 in the form of a computer readable storage medium 406 in the form of a memory 402 and communication circuitry 403.

The memory, 402, contains instructions executable by the processor, 401, such that the device 100, in one embodiment is operative to obtain 301, for a plurality of clients, information on a pattern of data transfers of the real-time service. In a preferred embodiment, the memory, 402, contains instructions executable by the processor, 401, such that the device 100 is operative to obtain 303, for at least one worker, information on run times, wherein a run time defines a time period during which the at least one worker processes data. In a preferred embodiment, the device 100 may be operative to determine 305 a scheduling based at least on the obtained information on the pattern of data transfers and on the run times. The scheduling comprises an offset modifying the pattern of data transfers. In an embodiment, the device 100 may be operative to send 307 the offset, to one or more clients of the plurality of clients.

Further, the device 100 may be operative to send 309 information on a number of workers to a controller, if the scheduling comprises information on the number of workers.

Preferably, the device 100 is further operative to obtain 310/311 an approval of the offset, if the device receives an acknowledgment from the one or more clients within a defined time interval. The device 100 is operative to obtain 311 a rejection, if the device does not receive the acknowledgment from the one or more clients within the defined time interval.

According to an embodiment, the device 100 is further operative to obtain 311 an approval if the one or more clients accept the offset; or obtain 313 a rejection, if the one or more clients do not accept the offset. Further, the device 100 is operative to reschedule 305 in case of rejection.

In a preferred embodiment, the device 100 is further operative to detect 315 if the further data sent from the one or more clients is drifting from the offset; and to reschedule 305 if the further data is drifting.

Preferably, the device 100 is further operative to obtain 317 information on a status of a worker. Further, the device 100 is operative to reschedule 318/305, if the status of the worker is unhealthy or overloaded.

In a preferred embodiment, the device 100 is further operative to verify 319 if there is available capacity for processing data; and to reject 321 the data if there is not available capacity.

The device, 100, may include a processing circuitry (one or more than one processor), 401, coupled to communication circuitry, 403, and to the memory 402. The device, 100, may comprise more than one communication circuitry. For simplicity and brevity only one communication circuitry, 403, has been illustrated in Figure 4. By way of example, the communication circuitry, 403, the processor(s) 401, and the memory 402 may be connected in series as illustrated in Figure 4. Alternatively, these components 403, 401 and 402 may be coupled to an internal bus system of the device, 100.

The memory 402 may include a Read-Only-Memory, ROM, e.g., a flash ROM, a Random-Access Memory, RAM, e.g., a Dynamic RAM, DRAM, or Static RAM, SRAM, amass storage, e.g., a hard disk or solid state disk, or the like.

The computer program product 405 comprises a computer program 405, which comprises computer program code loadable into the processor 401, wherein the computer program 404 comprises code adapted to cause the device 100 to perform the steps of the method described herein, when the computer program code is executed by the processor 401. In other words, the computer program 404 may be a software hosted by the device 100.

It is to be understood that the structures as illustrated in Figure 4 are merely schematic and that the device, 100, may actually include further components which, for the sake of clarity, have not been illustrated, e.g., further interfaces or processors. Also, it is to be understood that the memory, 402, may include further program code for implementing other and/or known functionalities.

It is also to be understood that the device, 100, may be provided as a virtual apparatus. In one embodiment, the device, 100, may be provided in distributed resources, such as in cloud resources. When provided as virtual apparatus, it will be appreciated that the memory, 402, processing circuitry, 401, and communication circuitry, 403, may be provided as functional elements. The functional elements may be distributed in a logical network and not necessarily be directly physically connected. It is also to be understood that the device, 100, may be provided as a single-node device, or as a multi-node system.

A client 101 and the device100 may communicate through a subscription protocol, such as message queuing telemetry transport, MQTT, protocol, Open Platform Communications Unified Architecture (OPC-UA), Data Distribution Service (DDS), or utilizing any one of a number of transfer protocols (e.g., frame relay, internet protocol, IP, transmission control protocol, TCP, user datagram protocol, UDP, hypertext transfer protocol, HTTP), or by using Remote Procedure Call, RPC, protocols, such as gRPC. TLS may be used to ensure security requirements. The same protocols may be used in a communication between the device 100 and a worker 105.

In case of HTTP, for example, a device 100 may obtain information on a pattern of data transfers of a real-time service, obtain information on run times, send an offset, and send a number of workers in "POST" messages.

Figure 5 schematically illustrates, in terms of a number of functional units, the components of a device 100 according to an embodiment. The device 100 comprises a first obtaining unit 501 configured to obtain, for a plurality of workers, information on a pattern of data transfers of a real-time service, and a second obtaining unit 503 configured to obtain, for at least one worker, information on run times. The information obtained by the first obtaining unit 501 and the information obtained by the second obtaining unit 502 are used by a determining unit 505 configured to determine a scheduling based at least on the obtained information on the pattern of data transfers and on the run times. A first sending unit 507 is configured to send to one or more clients an offset comprised in the scheduling determined by the determining unit 505.

The device 100 may further comprise a second sending unit 509 configured to send to a controller a number of workers, if the scheduling determined by the determining unit 505 comprises also information on the number of workers.

The device 100 may further comprise a third obtaining unit 511 configured to obtain an approval of the offset if the load balancer receives an acknowledgment from the one or more clients within a defined time interval. The third obtaining unit may also be further configured to obtain an approval if the one or more clients accept the offset; or to obtain a rejection if the one or more clients do not accept the offset. The determining unit 505 may be further configured to reschedule in case of rejection.

The device 100 may further comprise a detecting unit 515 if the further data sent from the one or more clients are drifting from the offset. If the further data is drifting, the determining unit 505 may be further configured to reschedule.

The device 100 may further comprise a fourth obtaining unit 517 configured to obtain information on a status of a worker. If the status of the worker is unhealthy or overloaded, the determining unit 505 may be further configured to reschedule.

The device 100 may further comprise a verifying unit 519 configured to verify if there is available capacity for processing data, and a rejecting unit 521 configured to reject the data is there is not available capacity.

In general terms, each functional unit 501-521 may be implemented in hardware or in software. Preferably, one or more or all functional modules 501-521 may be implemented by the processor 501, possibly in cooperation with the communications circuitry 503 and the computer readable storage medium 506 in the form of a memory 502. The processor 501 may thus be arranged to fetch instructions as provided by a functional unit 501-521 from the computer readable storage medium 506 in the form of a memory 502 fetch instructions as provided by a functional module 501-521 and to execute these instructions, thereby performing any steps of the device 100 as disclosed herein.

## Claims

1. A method for a real-time service, performed by a load balancer (100), the method comprising
- for a plurality of clients, obtaining (301) information on a pattern of data transfers of the real-time service;
- for at least one worker, obtaining (303) information on run times, wherein a run time defines a time period during which the at least one worker processes data;
- determining (305) scheduling based at least on the obtained information on the pattern of data transfers and on the run times, wherein the scheduling comprises an offset modifying the pattern of data transfers;
- sending (307) the offset to one or more clients of the plurality of clients.

2. A device (100) for a real-time service, the device (100) being a load balancer and comprising a processor (401) and a memory (402), the memory (402) having stored thereon instructions executable by the processor (401), wherein the instructions, when executed by the processor (401), cause the device (100) to:
- for a plurality of clients, obtain information on a pattern of data transfers of the real-time service;
- for at least one worker, obtain information on run times, wherein a run time defines a time period during which the at least one worker processes data;
- determine scheduling based at least on the obtained information on the pattern of data transfers and on the run times, wherein the scheduling comprises an offset modifying the pattern of data transfers;
- send the offset to one or more clients of the plurality of clients.

3. The device (100) according to claim 2, wherein the scheduling comprises information on number of workers and an identification of a worker to send further data for processing.

4. The device (100) according to any of claims 2-3, wherein the instructions, when executed by the processor (401), cause the device (100) to
- send to a controller the information on the number of workers.

5. The device (100) according to any of claims 2-4, wherein the instructions, when executed by the processor (401), cause the device (100) to
- obtain an approval if all the one or more clients accept the offset.

6. The device (100) according to any of claims 2-5, wherein the instructions, when executed by the processor (401), cause the device (100) to
- obtain an approval if at least a number of clients higher than a first threshold accept the offset.

7. The device (100) according to claim 6, wherein the first threshold is indicative of a number of clients that do not accept the offset.

8. The device (100) according to any of claims 2-4, wherein the instructions, when executed by the processor (401), cause the device (100) to
- obtain a rejection if all the one or more clients do not accept the offset.

9. The device (100) according to any of claims 2-4, wherein the instructions, when executed by the processor (401), cause the device (100) to
- obtain a rejection if at least a number of clients higher than a second threshold do not accept the offset.

10. The device (100) according to any of claims 7-9, wherein the instructions, when executed by the processor (401), cause the device (100) to
- reschedule in case of rejection.

11. The device (100) according to any of claims 2-10, wherein the instructions, when executed by the processor (401), cause the device (100) to
- detect if the further data sent from the one or more clients are drifting from the offset;
- reschedule if the further data is drifting.

12. The device (100) according to any of claims 2-11, wherein the instructions, when executed by the processor (401), cause the device (100) to
- obtain information on a status of a worker.

13. The device (100) according to claim 12, wherein the instructions, when executed by the processor (401), cause the device (100) to
- reschedule (318/305) if the status of the worker is unhealthy or overloaded.

14. A computer program (404) comprising instructions which, when run in a processing unit on a load balancer (100), cause the load balancer (100) to:
- for a plurality of clients, obtain information on a pattern of data transfers of a real-time service;
- for at least one worker, obtain information on run times, wherein a run time defines a time period during which the at least one worker processes data;
- determine scheduling based at least on the obtained information on the pattern of data transfers and on the run times, wherein the scheduling comprises an offset modifying the pattern of data transfers;
- send the offset to one or more clients of the plurality of clients.

15. A computer program product (405) comprising a computer readable storage medium (406) on which a computer program (404) according to claim 14 is stored.

## Patentansprüche

1. Verfahren für einen Echtzeitdienst, der von einem Lastausgleicher (100) durchgeführt wird, wobei das Verfahren umfasst
- für eine Vielzahl von Clients, Erhalten (301) von Informationen über ein Muster von Datenübertragungen des Echtzeitdienstes;
- für mindestens einen Arbeiter, Erhalten (303) von Informationen über Laufzeiten, wobei eine Laufzeit einen Zeitraum definiert, in dem der mindestens eine Arbeiter Daten verarbeitet; - Bestimmen (305) einer Zeitplanung basierend mindestens auf den erhaltenen Informationen über das Muster von Datenübertragungen und über die Laufzeiten, wobei die Zeitplanung einen Versatz umfasst, der das Muster von Datenübertragungen ändert;
- Senden (307) des Versatzes an einen oder mehrere Clients aus der Vielzahl von Clients.

2. Vorrichtung (100) für einen Echtzeitdienst, wobei die Vorrichtung (100) ein Lastenausgleicher ist und einen Prozessor (401) und einen Speicher (402) umfasst, wobei der Speicher (402) darauf gespeicherte Anweisungen aufweist, die durch den Prozessor (401) ausführbar sind, wobei die Anweisungen, wenn sie durch den Prozessor (401) ausgeführt werden, die Vorrichtung (100) veranlassen,
- für eine Vielzahl von Clients Informationen über ein Muster von Datenübertragungen des Echtzeitdienstes zu erhalten;
- für mindestens einen Arbeiter Informationen über Laufzeiten zu erhalten, wobei eine Laufzeit einen Zeitraum definiert, in dem der mindestens eine Arbeiter Daten verarbeitet;
- eine Zeitplanung basierend mindestens auf den erhaltenen Informationen über das Muster von Datenübertragungen und über die Laufzeiten zu bestimmen, wobei die Zeitplanung einen Versatz umfasst, der das Muster von Datenübertragungen ändert;
- den Versatz an einen oder mehrere Clients der Vielzahl von Clients zu senden.

3. Vorrichtung (100) nach Anspruch 2, wobei die Zeitplanung Informationen über die Anzahl an Arbeitern und eine Identifikation eines Arbeiters umfasst, um weitere Daten zur Verarbeitung zu senden.

4. Vorrichtung (100) nach einem der Ansprüche 2-3, wobei die Anweisungen, wenn sie durch den Prozessor (401) ausgeführt werden, die Vorrichtung (100) veranlassen,
- einer Steuereinheit die Informationen über die Anzahl an Arbeitern zu senden.

5. Vorrichtung (100) nach einem der Ansprüche 2-4, wobei die Anweisungen, wenn sie durch den Prozessor (401) ausgeführt werden, die Vorrichtung (100) veranlassen,
- eine Genehmigung zu erhalten, wenn alle des einen oder der mehreren Clients den Versatz akzeptieren.

6. Vorrichtung (100) nach einem der Ansprüche 2-5, wobei die Anweisungen, wenn sie durch den Prozessor (401) ausgeführt werden, die Vorrichtung (100) veranlassen,
- eine Genehmigung zu erhalten, wenn mindestens eine Anzahl an Clients, die über einem ersten Schwellenwert liegt, den Versatz akzeptieren.

7. Vorrichtung (100) nach Anspruch 6, wobei der erste Schwellenwert auf eine Anzahl von Clients hinweist, die den Versatz nicht akzeptieren.

8. Vorrichtung (100) nach einem der Ansprüche 2-4, wobei die Anweisungen, wenn sie durch den Prozessor (401) ausgeführt werden, die Vorrichtung (100) veranlassen,
- eine Ablehnung zu erhalten, wenn alle des einen oder der mehreren Clients den Versatz nicht akzeptieren.

9. Vorrichtung (100) nach einem der Ansprüche 2-4, wobei die Anweisungen, wenn sie durch den Prozessor (401) ausgeführt werden, die Vorrichtung (100) veranlassen,
- eine Ablehnung zu erhalten, wenn mindestens eine Anzahl von Clients, die über einem zweiten Schwellenwert liegt, den Versatz nicht akzeptieren.

10. Vorrichtung (100) nach einem der Ansprüche 7-9, wobei die Anweisungen, wenn sie durch den Prozessor (401) ausgeführt werden, die Vorrichtung (100) veranlassen,
- im Falle einer Ablehnung zeitlich neu zu planen.

11. Vorrichtung (100) nach einem der Ansprüche 2-10, wobei die Anweisungen, wenn sie durch den Prozessor (401) ausgeführt werden, die Vorrichtung (100) veranlassen,
- zu erkennen, ob die weiteren von dem einen oder den mehreren Clients gesendeten Daten vom Versatz abweichen; wenn die weiteren Daten abweichen, zeitlich neu zu planen.

12. Vorrichtung (100) nach einem der Ansprüche 2-11, wobei die Anweisungen, wenn sie durch den Prozessor (401) ausgeführt werden, die Vorrichtung (100) veranlassen,
- Informationen über einen Status eines Arbeiters zu erhalten.

13. Vorrichtung (100) nach Anspruch 12, wobei die Anweisungen, wenn sie durch den Prozessor (401) ausgeführt werden, die Vorrichtung (100) veranlassen,
- wenn der Status des Arbeiters ungesund oder überlastet ist, zeitlich neu zu planen (318/305).

14. Computerprogramm (404), das Anweisungen umfasst, die, wenn sie in einer Verarbeitungseinheit auf einem Lastenausgleicher (100) laufen, den Lastenausgleicher (100) veranlassen:
- für eine Vielzahl von Clients Informationen über ein Muster von Datenübertragungen eines Echtzeitdienstes zu erhalten;
- für mindestens einen Arbeiter Informationen über Laufzeiten zu erhalten, wobei eine Laufzeit einen Zeitraum definiert, in dem der mindestens eine Arbeiter Daten verarbeitet;
- eine Zeitplanung basierend mindestens auf den erhaltenen Informationen über das Muster von Datenübertragungen und über die Laufzeiten zu bestimmen, wobei die Zeitplanung einen Versatz umfasst, der das Muster von Datenübertragungen ändert;
- den Versatz an einen oder mehrere Clients der Vielzahl von Clients zu senden.

15. Computerprogrammprodukt (405), das ein computerlesbares Speichermedium (406) umfasst, auf dem ein Computerprogramm (404) nach Anspruch 14 gespeichert ist.

## Revendications

1. Procédé pour un service en temps réel, effectué par un équilibreur de charge (100), le procédé comprenant
- pour une pluralité de clients, l'obtention (301) d'informations sur un modèle de transferts de données du service en temps réel ;
- pour au moins une unité de travail, l'obtention (303) d'informations sur des temps d'exécution, dans lequel un temps d'exécution définit une période de temps pendant laquelle la au moins une unité de travail traite des données ; - la détermination (305) d'une planification sur la base au moins des informations obtenues sur le modèle de transferts de données et sur les temps d'exécution, dans lequel la planification comprend un décalage modifiant le modèle de transferts de données ;
- l'envoi (307) du décalage à un ou plusieurs clients de la pluralité de clients.

2. Dispositif (100) pour un service en temps réel, le dispositif (100) étant un équilibreur de charge et comprenant un processeur (401) et une mémoire (402), la mémoire (402) présentant des instructions stockées sur celle-ci, exécutables par le processeur (401), dans lequel les instructions, lorsqu'elles sont exécutées par le processeur (401), amènent le dispositif (100) à :
- pour une pluralité de clients, obtenir des informations sur un modèle de transferts de données du service en temps réel ;
- pour au moins une unité de travail, obtenir des informations sur des temps d'exécution, dans lequel un temps d'exécution définit une période de temps pendant laquelle la au moins une unité de travail traite des données ;
- déterminer une planification sur la base au moins des informations obtenues sur le modèle de transferts de données et sur les temps d'exécution, dans lequel la planification comprend un décalage modifiant le modèle de transferts de données ;
- envoyer le décalage à un ou plusieurs clients de la pluralité de clients.

3. Dispositif (100) selon la revendication 2, dans lequel la planification comprend des informations sur le nombre d'unités de travail et une identification d'une unité de travail pour envoyer des données supplémentaires à traiter.

4. Dispositif (100) selon l'une quelconque des revendications 2-3, dans lequel les instructions, lorsqu'elles sont exécutées par le processeur (401), amènent le dispositif (100) à
- envoyer à un dispositif de commande les informations sur le nombre d'unités de travail.

5. Dispositif (100) selon l'une quelconque des revendications 2-4, dans lequel les instructions, lorsqu'elles sont exécutées par le processeur (401), amènent le dispositif (100) à
- obtenir une approbation si tous les un ou plusieurs clients acceptent le décalage.

6. Dispositif (100) selon l'une quelconque des revendications 2-5, dans lequel les instructions, lorsqu'elles sont exécutées par le processeur (401), amènent le dispositif (100) à
- obtenir une approbation si au moins un nombre de clients supérieur à un premier seuil acceptent le décalage.

7. Dispositif (100) selon la revendication 6, dans lequel le premier seuil indique un nombre de clients qui n'acceptent pas le décalage.

8. Dispositif (100) selon l'une quelconque des revendications 2-4, dans lequel les instructions, lorsqu'elles sont exécutées par le processeur (401), amènent le dispositif (100) à
- obtenir un rejet si tous les un ou plusieurs clients n'acceptent pas le décalage.

9. Dispositif (100) selon l'une quelconque des revendications 2-4, dans lequel les instructions, lorsqu'elles sont exécutées par le processeur (401), amènent le dispositif (100) à
- obtenir un rejet si au moins un nombre de clients supérieur à un second seuil n'acceptent pas le décalage.

10. Dispositif (100) selon l'une quelconque des revendications 7-9, dans lequel les instructions, lorsqu'elles sont exécutées par le processeur (401), amènent le dispositif (100) à
- reprogrammer en cas de rejet.

11. Dispositif (100) selon l'une quelconque des revendications 2-10, dans lequel les instructions, lorsqu'elles sont exécutées par le processeur (401), amènent le dispositif (100) à
- détecter si les données supplémentaires envoyées par les un ou plusieurs clients s'écartent du décalage ; reprogrammer si les données supplémentaires s'écartent.

12. Dispositif (100) selon l'une quelconque des revendications 2-11, dans lequel les instructions, lorsqu'elles sont exécutées par le processeur (401), amènent le dispositif (100) à
- obtenir des informations sur l'état d'une unité de travail.

13. Dispositif (100) selon la revendication 12, dans lequel les instructions, lorsqu'elles sont exécutées par le processeur (401), amènent le dispositif (100) à
- reprogrammer (318/305) si l'état de l'unité de travail est déséquilibré ou surchargé.

14. Programme informatique (404) comprenant des instructions qui, lorsqu'elles sont exécutées dans une unité de traitement sur un équilibreur de charge (100), amènent l'équilibreur de charge (100) à :
- pour une pluralité de clients, obtenir des informations sur un modèle de transferts de données d'un service en temps réel ;
- pour au moins une unité de travail, obtenir des informations sur des temps d'exécution, dans lequel un temps d'exécution définit une période de temps pendant laquelle la au moins une unité de travail traite des données ;
- déterminer une planification sur la base au moins des informations obtenues sur le modèle de transferts de données et sur les temps d'exécution, dans lequel la planification comprend un décalage modifiant le modèle de transferts de données ;
- envoyer le décalage à un ou plusieurs clients de la pluralité de clients.

15. Produit de programme informatique (405) comprenant un support de stockage lisible par ordinateur (406) sur lequel un programme informatique (404), selon la revendication 14, est stocké.
